# EUROPEAN PATENT APPLICATION

(11) **EP 0 792 578 A2**
(43) Date of publication of application: **03.09.1997**
(21) Application number: 97103096.0
(22) Date of filing: 26.02.1997
(51) Int. Cl.: A01G 1/12, A47L 5/14

(54) **Portable blower-vacuum unit**

(30) Priority: 01.03.1996 IT VI960028
(71) Applicant: Valex S.r.L., 36015 Schio (Vicenza) (IT)
(72) Inventor: Spillere, Antonio, 36030 - Villaverla (Vicenza) (IT)
(74) Representative: Forattini, Amelia

(57) **Abstract**

A portable blower-vacuum unit includes an aspiration duct (15) with an end opening (17), a blowing channel (16) which is laterally adjacent and substantially parallel to the aspiration duct (15), a filtering container (4) for selectively retaining the aspirated solid material, a pressure means (10-13) for generating a stream of air in the aspiration duct (15), and a means for shredding solid material. The pressure means includes an impeller (10) with vanes which is substantially coaxial and aligned with respect to the aspiration duct (15). The impeller (10) is accommodated in a substantially cylindrical pressure chamber (11) which has an axial conduit (12) connected to the aspiration duct (15) and a radial conduit (14) which is selectively connected to the blowing duct (16) and/or to the container (4) by virtue of a flow redirection device (27). The shredding means is constituted by inclined edges (26) of the vanes of the portion of the impeller (23) that faces the aspiration duct (15).

## Description

The present invention relates to a portable blower-vacuum unit particularly for aspirating and gathering leaves and other light solid residues when cleaning gardens, lawns, and surfaces in general.

Many portable devices of the above type are commercially available and are essentially constituted by a body composed of multiple parts of rigid material which contains a small compressor driven by an electric motor or internal-combustion engine and connected to an air inlet by a suitable duct. The compressor is usually constituted by a centrifugal fan or impeller with vanes made of sheet metal or plastic, which is accommodated in an essentially cylindrical pressure chamber with an axial inlet and a radial outlet.

The air stream generated by the impeller can be conveyed into a filtering container which is suitable to retain the aspirated material, generally constituted by leaves, twigs, and light residues. The collected material is then periodically unloaded from the container when it is full.

In order to reduce the volume of the material collected in the container and therefore reduce the frequency with which it is emptied, cleaning devices can be provided with parts for shredding the aspirated residues.

The ratio between the volume of the leaves gathered in the container, respectively with and without shredding, is used as an indicator of the efficiency of these parts; based on experience, this ratio can vary between approximately 1:3 and 1:12.

Generally, conventional blower-vacuum devices can be divided into two large groups depending on the arrangement and shape of the aspiration parts.

A first type of unit, described and illustrated for example in US-4,325,163 and in EP-0 198 654, has a conduit for the aspiration duct which is coaxial to the fan and a conduit for the outlet duct which is substantially perpendicular to the fan. The collecting container is usually constituted by a bag of air-permeable material, which is coupled below the machine or is carried on the shoulder by the user.

In this configuration, the unit acts as an ordinary vacuum unit; however, it can also act as a blower, in order to propel leaves and light objects like a sort of pneumatic broom. In order to do this, it is necessary to separate the collecting container from the outlet and connect in its place a flexible hose with a shaped nozzle, which is provided as a separate accessory, in order to generate a high-speed air jet. Furthermore, a protective grille must be mounted on the inlet in order to avoid possible accidental contacts with the impeller.

A drawback of these known units is the fact that they are composed of a considerable number of parts which must be assembled and disassembled in each instance according to the use, and are expensive.

In these conventional machines, shredding is performed by the fan itself, which breaks and centrifuges the aspirated material with its vanes. By virtue of this arrangement, one obtains a rather high shredding coefficient of approximately 1:10.

In another type of cleaning device, described and illustrated for example in EP-0 587 272 and EP-0 657 587, the compressor always operates like a blower, generating a stream of pressurized air which is conveyed into an outlet duct. The air and the scattered material are aspirated indirectly, by selectively conveying the air of the outlet duct into an aspiration duct which is parallel to the first one and passing through a narrower region or Venturi tube which is suitable to produce suction. A suitable shunt valve, which can be operated from outside by virtue of a lever that is close to the handle, allows to direct the stream either towards the outlet duct in order to use the unit as a blower, or towards the aspiration duct, using the unit as a vacuum unit.

In these machines, the collecting container is usually anchored to the body and does not have to be carried on the shoulder by the user.

With respect to units of the first type, the latter have the advantage of having a fixed configuration, which avoids the construction and assembly of several accessories which must be mounted in each case, with obviously greater practicality and economy.

A drawback of these conventional devices is constituted by the fact that they do not shred the material, since the stream does not pass through the impeller. In order to obviate this shortcoming, it has been thought to arrange a rotating line, supported by the shaft of the motor, in a position that lies directly upstream of the inlet section of the collecting container. However, since not all the leaves are struck by the shredding member, the resulting shredding coefficient is rather low, at approximately 4:1.

The aim of the present invention is to overcome the drawbacks described above, providing a portable blower-vacuum unit which is highly compact, efficient, and functional, producing a synergistic effect among the various characteristics of the different kinds of machine of the known art.

A further aim is to reduce the number of parts, so as to contain manufacturing and assembly costs in addition to increasing the reliability of the unit as a whole.

Still a further aim is to provide a unit that has a fixed and monolithic structure which allows to perform both aspiration and blowing without having to assemble accessory parts.

A further aim is to provide a unit that has a high shredding ratio.

This aim, and others, are achieved by a portable blower-vacuum unit with built-in shredder according to the appended claims.
The unit according to the invention is highly compact and constructively simple, has a high aspirating and blowing force, and an excellent shredding ratio.

The dependent claims describe particular characteristics of the unit according to the invention.

For the sake of better comprehension of the invention, a preferred but not exclusive embodiment of a portable blower-vacuum unit according to the invention is described hereinafter and is illustrated only by way of non-limitative example in the accompanying drawings, wherein:

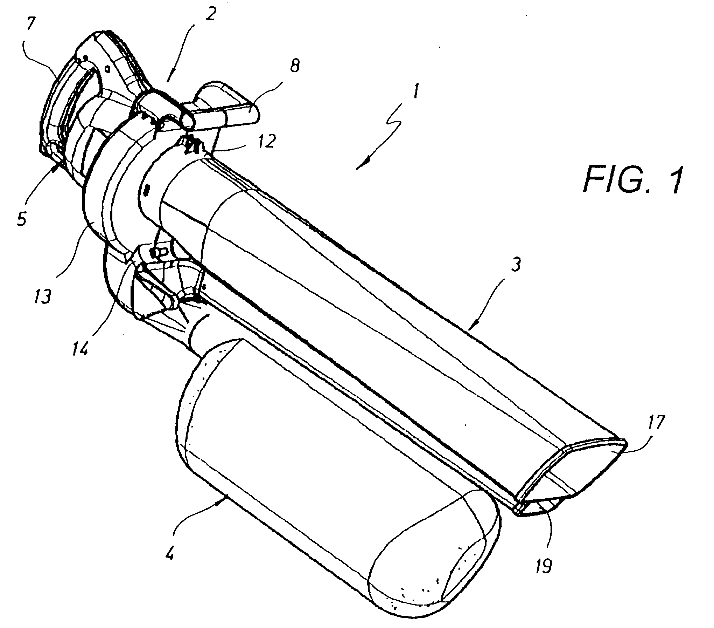

Figure 1 is a general front perspective view of the unit according to the invention;

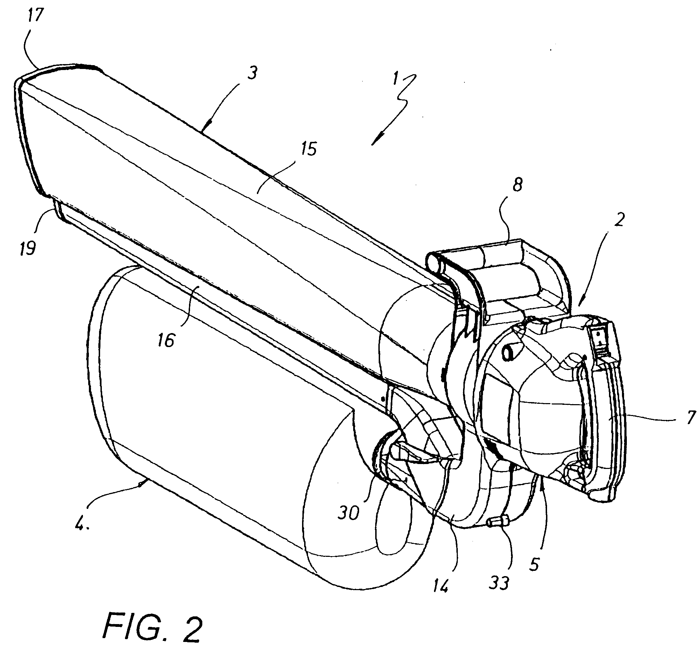

Figure 2 is a general rear perspective view of the unit according to the invention;

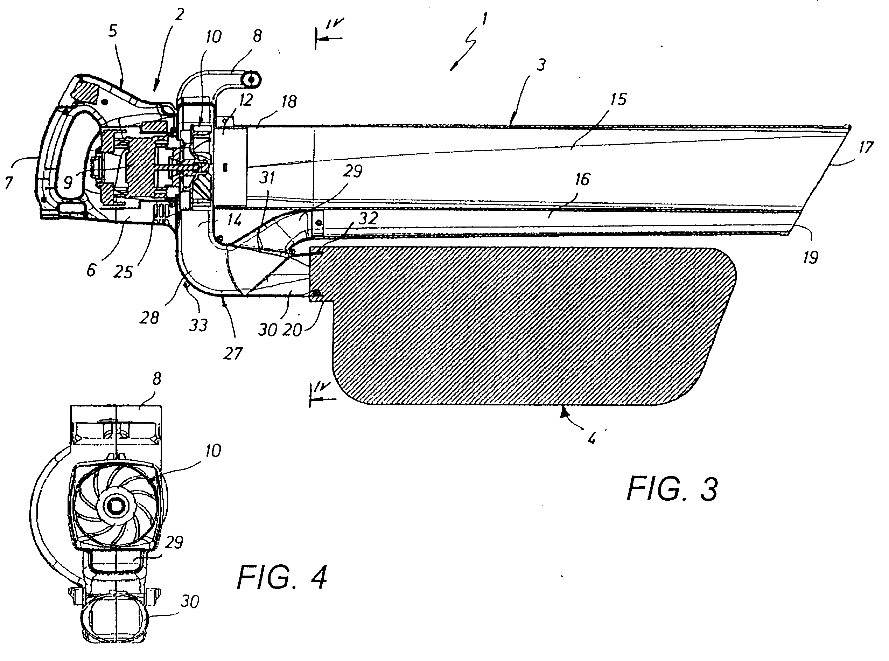

Figure 3 is a partially sectional side view of the unit of Figures 1 and 2, taken along an axial longitudinal plane;
Figure 4 is a front view of the unit of Figures 1 and 2;

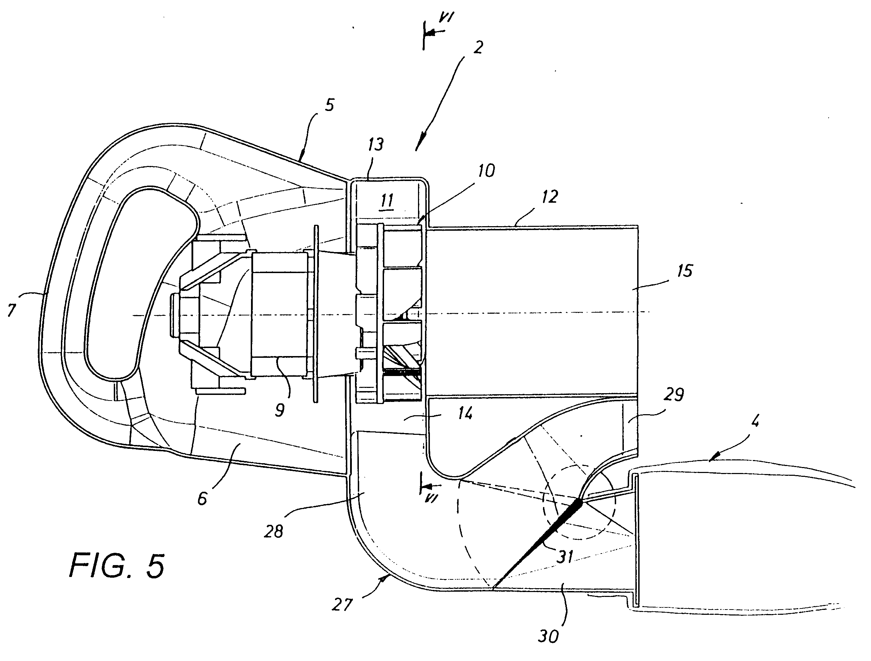

Figure 5 is an enlarged-scale view of a detail of Figure 3;
Figure 6 is a front view of the impeller of the unit;
Figure 7 is a sectional view of the impeller of Figure 6, taken along the plane VII-VII;
Figures 8 and 9 are schematic views of two operating modes of the unit according to the invention.

With reference to the above figures, a portable blower-vacuum unit according to the invention, generally designated by the reference numeral 1, includes a main part 2 to which it is possible to stably and detachably connect a secondary part 3 and a collecting container 4.

The main part 2 is formed by a body 5 made of rigid or semirigid material, which forms a compartment 6 for a pressure means suitable to generate a stream of air through the secondary part 3, with a handle 7 and a maneuvering grip 8 to allow a user to hold and direct the unit.

The pressure means is formed by a DC or AC motor 9 which is powered by the electric mains by a transformer/rectifier unit or by rechargeable batteries of a per se known type which are not illustrated in the drawings; an impeller 10 with vanes is keyed on the shaft of the motor.

The impeller 10 is accommodated in a pressure chamber 11 that is essentially cylindrical and has an axial inlet conduit 12, a precisely sized volute 13, and a radial outlet conduit 14.

The tubular part 3 includes an aspiration duct 15 and a blowing duct 16.

The aspiration duct 15 has a substantially constant transverse cross-section, an end opening 17 which is inclined so as to facilitate contact with the surfaces to be cleaned, and a cylindrical connecting portion 18 which can be detachably coupled to the inlet conduit 12 of the pressure chamber 11. The blowing duct 16 has a transverse cross-section that decreases continuously towards the outlet section 19.

The container 4 is essentially constituted by a tubular bag made of fabric or the like which is air-permeable in order to filter and retain impurities and particles of solid material dispersed in the air, with a neck 20 for connection to the main part 2.

According to the invention, the impeller 10 with vanes is substantially coaxial and aligned with respect to the aspiration duct 15. In this manner, the inlet section of the impeller 10 directly faces the aspiration duct, minimizing load losses in this duct.

The impeller 10 includes devices for shredding the aspirated particles of solid material.

In particular, the impeller 10 includes a central hub 21 which supports an essentially flat flange 22.

A first set of centrifugal vanes 23, directed towards the aspiration duct 15 in order to draw air from it, protrudes from the flange 22. A second set of vanes 24, directed towards the motor chamber 6 in order to aspirate motor cooling air through slots 25, protrudes on the opposite side of the flange 22. The air, accelerated by the sets of vanes 23 and 24, is conveyed into the pressure chamber 11 and conveyed by the volute 13.

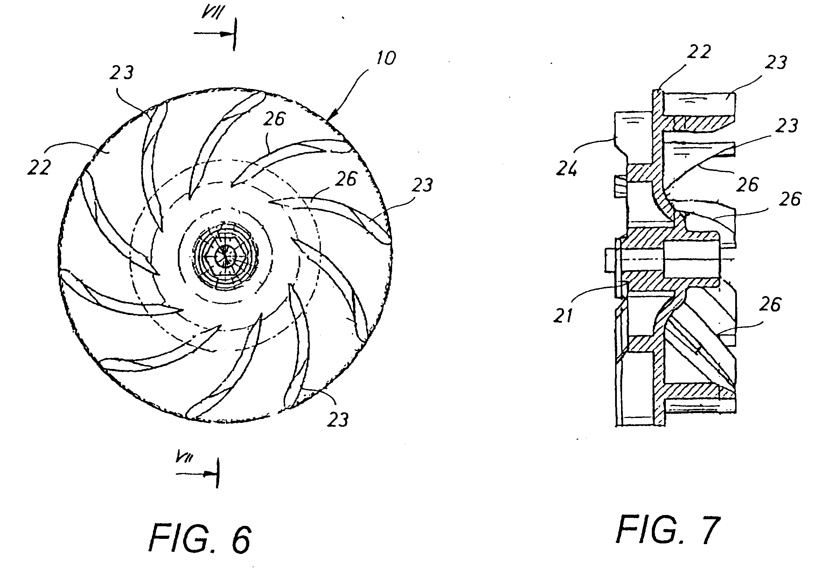

The shredding means is constituted by the inclined edges 26 of the vanes, which are clearly visible in Figure 7. Tests have demonstrated that the resulting shredding ratio is approximately 1:10.

The outlet conduit 14 of the pressure chamber 11 is joined to a substantially Y-shaped flow redirection device 27 with an inlet branch 28 and two outlet branches 29 and 30 which are connected to the blowing duct 16 and to the container 4 respectively.

A flap-shaped valve part 31 is pivoted in the branching region of the two outlet branches 29 and 30 and can be turned from outside by virtue of a lever 32.

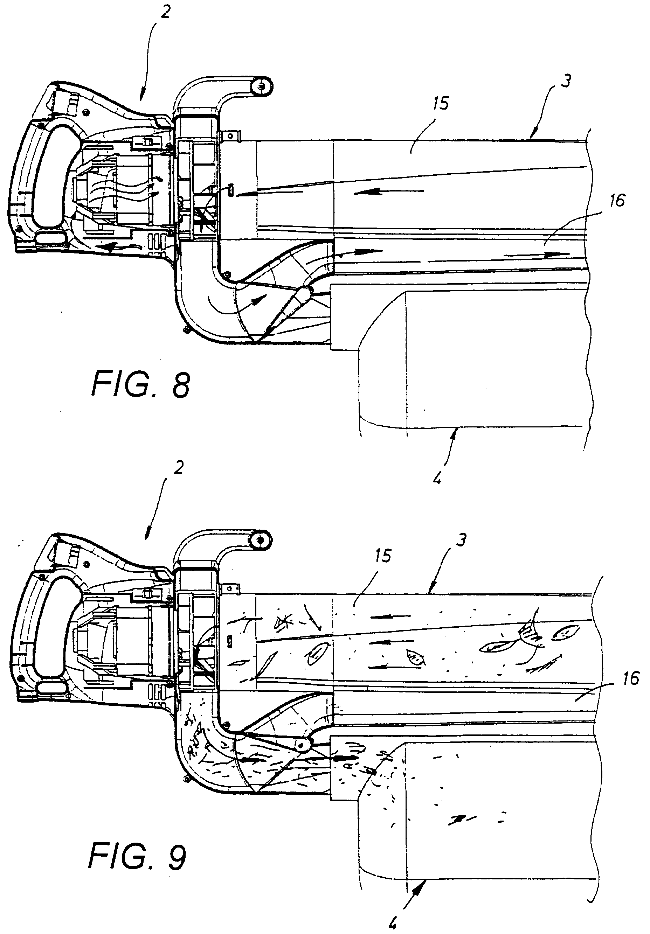

During use, by arranging the valve part 32 in the position A of Figure 8, one obtains a stream of air in the aspiration duct 15 which draws leaves and other solid particles from the surface towards which the aspiration opening 17 is moved. The aspirated particles are shredded and centrifuged in the impeller 10 and conveyed into the container 4, where they gradually collect. If a rather bulky object, or in any case an object that cannot pass through the vanes of the impeller is aspirated, it interferes with the fan 10, which is momentarily jammed. The halting of the motor 9 causes a current overload which is immediately detected by an ammeter relay and causes a power cut off, preventing the armature of the motor 9 from burning. In this manner, aspiration is interrupted, causing the object to fall back to the ground.

By moving the valve part into position B of Figure 9, the air stream in the aspiration duct 15 is conveyed and accelerated into the blowing channel 16, pushing the materials away from the aspiration opening 17. Therefore the air aspirated by the aspiration duct 15 is substantially clean and is discharged from the nozzle 19 in the same conditions.

From a constructive point of view, the body 5 can be advantageously formed by two facing half-shells, obtained by molding or injecting low-cost plastic materials and joined by detachable screw-type connecting members 33 or the like.

The part 2 that includes the aspirating duct 15 and the outlet duct 16 can be advantageously formed monolithically, also by molding or injecting plastic materials.

In this manner, one obtains a considerable containment of the manufacturing and assembly costs of the entire unit.

The unit according to the invention is susceptible of numerous modifications and variations, all of which are within the scope of the inventive concept expressed by the accompanying claims. All the details may be replaced with technical equivalents which are understood to be equally protected. The materials, the shapes, and the dimensions may be any according to the requirements.

## Claims

1. A portable blower-vacuum unit, comprising an aspiration duct (15) with an end opening (17) for collecting particles of solid material, a blowing channel (16) which is laterally adjacent and substantially parallel to the aspiration duct (15), a filtering container (4) for selectively retaining the aspirated solid material, a pressure means (10-13) for generating a stream of air in said aspiration duct (15), and a means for shredding solid material, characterized in that said pressure means comprises an impeller (10) with vanes which is substantially coaxial and aligned with respect to said aspiration duct (15) and comprises said shredding means.

2. The blower-vacuum unit according to claim 1, wherein said impeller (10) is accommodated in a substantially cylindrical pressure chamber (11) which has an axial conduit (12) that is connected to said aspiration duct (15) and a radial conduit (14) which is connected to said blowing duct (16) and/or to said container (4) by virtue of a flow redirection device (27).

3. The blower-vacuum unit according to claim 2, wherein said flow redirection device (27) is substantially Y-shaped, with a substantially perpendicular inlet branch (28) and two outlet branches (29, 30) which are substantially parallel to said aspiration duct (15), wherein the outlet branches (29, 30) are respectively connected to said blowing duct (16) and to said collecting container (4).

4. The blower-vacuum unit according to claim 3, wherein said flow redirection device (27) comprises a valve part (31) which is pivoted in the connecting region between said inlet branch and said outlet branches, with an actuation lever (32) which can be actuated from outside to selectively convey the stream of air towards said blowing channel or said container.

5. The blower-vacuum unit according to claim 1, wherein said impeller (10) is divided into two coaxial portions (23, 24) with vanes by a substantially disk-like dividing wall (21), one of said portions (23) being directed towards the aspiration duct (15).

6. The blower-vacuum unit according to claim 1, wherein said impeller (10) is keyed on the axis of an electric motor (9), the other portion of the impeller (24) being directed towards the motor housing (6) in order to generate a stream of cooling air.

7. The blower-vacuum unit according to claim 6, wherein said shredding means is constituted by edges (26) of the vanes of the portion of the impeller (23) which is directed towards the aspiration duct (15), said edges being inclined with respect to the axis of the impeller.

8. The blower-vacuum unit according to claim 1, wherein said blower duct (16) has a transverse cross-section that decreases continuously towards the end cross-section (18) and has considerably smaller end dimensions than said aspiration duct (15) in order to generate a high-speed air jet.

9. The blower-vacuum unit according to claim 1, wherein the walls of said pressure chamber (11), of the motor housing (6), and of said flow redirection device (27) are formed by a body made of molded or injected plastic material which also comprises a main handle (7) and an upper handle (8).

10. The blower-vacuum unit according to claim 9, wherein said body is formed by two half-shells which can be detachably coupled by virtue of screw-type coupling members (33) or equivalent devices.

11. The blower-vacuum unit according to claim 9, wherein said aspiration duct (15) is formed monolithically with said blowing duct (16) and can be detachably coupled to said body.
